# EUROPEAN PATENT APPLICATION

(11) **EP 4 775 479 A1**
(43) Date of publication of application: **15.07.2026**
(21) Application number: 25208041.1
(22) Date of filing: 10.10.2025
(51) Int. Cl.: B63B 1/28, B63B 1/30, B63B 39/06, B63G 8/18

(54) **VESSEL AND METHOD OF OPERATING VESSEL FOR MARINE OPERATIONS**

(30) Priority: 10.01.2025 NO 20250026
(71) Applicant: Proxflyer AS, 1360 Fornebu (NO)
(72) Inventor: MUREN, Petter, N-1360 Fornebu (NO)
(74) Representative: Acapo Onsagers AS

(57) **Abstract**

The present invention relates to a stabilized triple-mode vessel capable of operating on, above, and below the water surface. The vessel employs a novel configuration of U-, T- or L-shaped hydrofoils to optimize lift and minimize hydrodynamic drag. It is equipped with a stabilization system employing sensors such as an inertial measurement unit IMU (gyroscopes, accelerometers, compass), height sensors, and depth sensor for real-time dynamic adjustments. The vessel transitions seamlessly between three operational modes: surface-level, foiling, and submerged, through active control of hydrofoil angles and buoyancy regulation via air and water vents. The foiling mode serves as a high-speed state, minimizing hull-water contact and enhancing efficiency. Key features include advanced stabilization, simplified buoyancy control, and efficient propulsion, enabling the vessel to perform subsurface operations, reconnaissance, and high-speed transit with superior adaptability and performance.

## Description

### Technical field

The present application relates to a vessel for marine operations, specifically a vessel capable of operating both on, above and below the water surface. It addresses limitations of conventional hydrofoil designs by employing a novel foil assembly configuration as well as simplified buoyancy control combined with advanced stabilization and control systems.

### Background

Hydrofoil technology is used to enhance the speed and stability of watercraft by lifting the hull above the water's surface (foiling), thereby reducing drag (force slowing down the vessel). Conventional hydrofoils predominantly utilized V-shaped foils due to their self-stabilizing properties. However, such designs have relatively high drag and compromise lift-efficiency and adaptability.

While T-, L- and U-shaped hydrofoil assemblies, described as fully submerged hydrofoils, offer superior lift characteristics and much lower drag, they are inherently unstable and require active stabilization. The current state of the art lacks a simple mechanical implementation for this kind of foils, that offer a balance between lift performance, robustness and adaptability. Such solutions require innovative foil control mechanisms to ensure operational efficiency and reliability.

Self-stabilizing hydrofoil systems were envisioned more than 100 years ago. A ladder configuration, where several smaller foils are stacked on top of each other were suggested by the inventor Alexander Graham Bell in e.g. GB163035A and later V-shaped hydrofoils were described by e.g. Erlykin in US3693570. For stability control both these inventions rely on reduced lift as the hydrofoils raises out of the water and less foil area is submerged and contributing to the vertical lift. Both configurations, however, suffer from the fact that they create much more drag than one single submerged foil. In the case of V-foils, the lifting surfaces of the foil pierces the water-surface and creates more waves than assemblies with one or two vertical stuts (with no lift). The lift on each side of the V-shaped foil is perpendicular to the foil area - hence a substantial part, the horizontal component, of the left-side lift, directly oppose a similar horizontal component of the right-side lift and do not contribute to any vertical lift - only increased drag.

To overcome the problem of increased drag that does not contribute to vertical lift, later hydrofoil vessels have started to use fully submerged L-shaped or T-shaped hydrofoils and in some applications also U-shaped foil assemblies. One example is the solution suggested by Hasselskog in SE544119 where a U-shaped foil assembly with additional foil area protruding outside the U-shape of the foil assembly is described. This solution relies on mechanical joints and hinges in the struts (the vertical parts of the U-shape) that changes the lifting angle of the left-side and right-side independently by means of twisting the foil, to control the attitude of the vessel. This is not the most efficient way of controlling roll movements, hence the need for additional foil area protruding out to the sides. This solution is also mechanically relatively complex. All fully submerged hydrofoil systems require advanced electronic control systems to remain stable, but with modern electronic flight control systems readily available, the benefits are huge.

None of the inventions described above includes a vessel capable of underwater operations, that in some applications (e.g. military covert operations) could be very desirable. All hydrofoil vessels will typically benefit from having a lightweight hull with good buoyancy, the opposite of what a vessel for submerged operations normally would require. One way of reducing the amount of complicated ballast systems to allow underwater operations, is to allow flow of water into the hull in order to reduce the buoyancy. The Shadow Seal, a small underwater vessel from the company JFD Ltd, utilize this principle together with actively controlled ballast tanks, but has no significant capabilities in high-speed operations.

To overcome the limitations described above, the current invention suggests new solutions to both simplify and improve the capabilities of a vessel for marine operations - a vessel capable of operating both on, above and below the water surface.

Exemplary prior art documents include CN117002706A, Huo C. et al., Free-running tests on a self-propelled submersible multi-state vehicle model, Ocean Engineering, Volume 236, 2021, US2022/0106016 A1, US7278364 B2 and US 2023/0023286A1.

### Summary

In view of the above, an object according to embodiments of the present application is to overcome or at least mitigate drawbacks of prior art.

In a first aspect, a vessel for marine operations is provided. The vessel comprising one or more hulls capable of buoyancy control through air and water vents, one or more propulsion motors for providing thrust, a plurality of fully submerged hydrofoils arranged in foil assemblies configured to adjust their angles to create variable amounts and directions of lift, minimize hydrodynamic drag and provide attitude control, a stabilization system including sensors and actuators to dynamically maintain balance and control through adjusting the foil assembly angles, wherein the vessel is operable in three distinct modes: a first mode on the water surface at variable speeds with the one or more hulls partially filled with water, a second mode, foiling above the water surface, sustained by lift generated by the hydrofoils with the hull(s) drained of water, a third mode, submerged below the water surface at lower speeds with the one or more hulls filled with water, and wherein transitions between these modes are achieved by at least dynamically adjusting the angles of the foil assemblies and adjusting the speed of the vessel to control the passing of air and water in and out of said water and air vents.

In a second aspect, a method for marine operations corresponding to the operation of the vessel according to the first aspect is provided.

### Brief description of the drawings

Figure 1: Overview of an Unmanned Sub-Surface Foiling Vessel, USSFV, showing the hull and foil assemblies in a general operational context.
Figure 2a: Illustration of the vessel in surface-level mode, showing the hull partially submerged in water.
Figure 2b: Illustration of the vessel in foiling mode, demonstrating the hull lifted above the water surface (100) by the hydrofoils.
Figure 2c: Illustration of the vessel in submerged mode, with the hull fully submerged below the water surface.
Figure 3: Diagram of a stabilization system, including an IMU (50), height sensors (51), and a depth sensor (53).
Figure 4: Close-up perspective view with the deck removed, showing a servo (54) and their connections (55, 56) to the hydrofoil assemblies for dynamic angle adjustments of the foils, as well as the IMU and sensors for the control system.
Figure 5a-5b: Show the movement of the foils to control roll or sideways stability.
Figure 6: Show the movement of the front foil and motor/propeller to control yaw or travelling direction.
Figure 7a-7d: Show movements of the foils to control the attitude of the vessel in foiling mode. 7a - shows foil positions for pitch down, 7b - pitch up, 7c - increased lift to fly higher and 7d decreased lift to fly lower.
Figure 8a-8d: Show movements of the foils to control the attitude of the vessel in submerged mode. 8a - pitch down, 8b - pitch up, 8c - increased lift to go up and 8d decreased lift to go deeper. Additional foils (29, 39, 49) that may increase control during submerged modes are also shown.
Figure 9a-9b: Illustrations of water and air flow through the passive water and air vents during transitions. 9a shows the inward air flow (61) and outward water flow (64) during the transition from surface to foiling mode and 9b shows inward water flow (63) and outward air flow (62) during the transition to submerged mode.
Figure 10a-10d: Depiction of different foil configurations with a hull design having an open back end, and water and air vents, facilitating efficient air and water exchange during operation.

### Detailed description

According to embodiments of the present application as disclosed herein, the above-mentioned disadvantages of solutions according to prior art are eliminated or at least mitigated.

Embodiments of the present invention overcome the shortcomings of prior art by introducing a vessel supported by three or more U-, T- or L-shaped foil assemblies. These foils provide significantly enhanced lift and reduced drag compared to V-formed foils, enabling efficient operation above and below the water surface. The vessel is equipped with advanced stabilization software that actively controls the angles of the foils to ensure stable operation in various conditions.

Some of the key features of embodiments of the present application include U-, Tor L-formed Foil Assemblies, Active Stabilization System, Triple-Mode Operation (Surface, Foiling and Submerged) and a Water Vent System.

The innovative use of fully submerged foil configurations maximize lift while minimizing drag. This design also enables efficient hydrodynamic performance both during surface-level operation and underwater navigation.

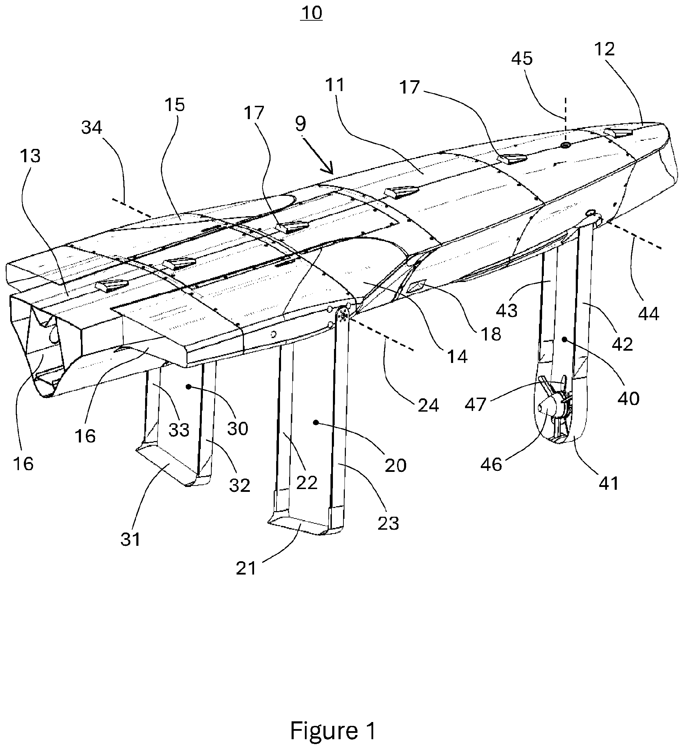

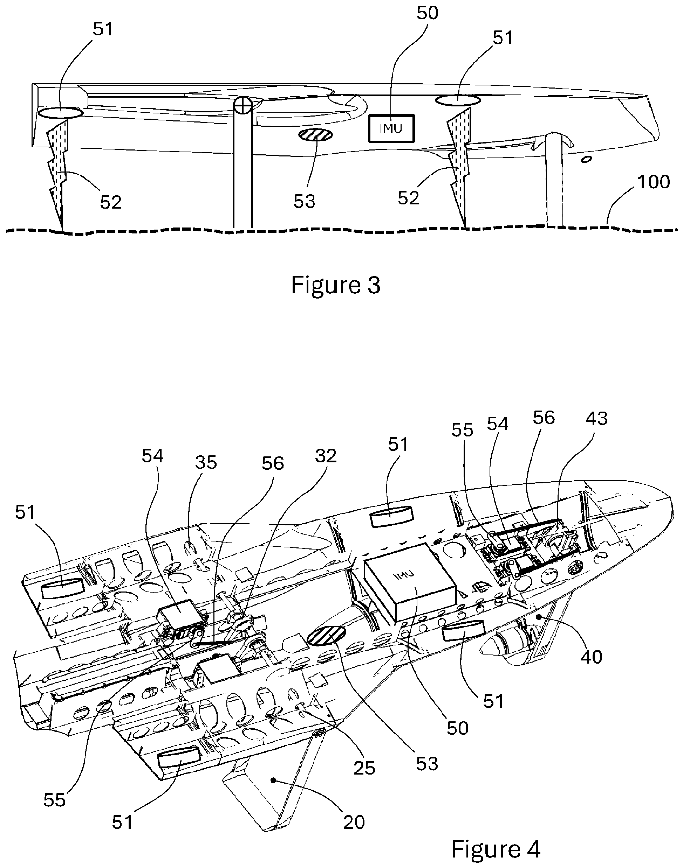

Some embodiments according to the present application will now be discussed referring to the accompanied drawings. A sea drone referred to as the Unmanned Sub-Surface Foiling Vessel, USSFV, (10), is illustrated in Figures 1 through 10. It is designed for operation both above and below the water surface (100). The vessel is equipped with a combination of innovative structural, hydrodynamic, and control elements, all of which are interconnected to ensure efficient and stable performance in a mechanically simple and robust system.

The USSFV may comprise the following main structural components:
The central body (9) of the vessel includes a Hull (11), featuring a streamlined design to minimize drag and improve hydrodynamics while the forward section of the hull includes a Front End (12).

The rear section includes a Back End (13) equipped with an Open Back End (16) to facilitate the exchange of water and air during transitions between foiling, surface and submerged states. Sides (14, 15) comprise the Right- and Left sides of the Hull, supporting the foil assemblies and associated mechanisms.

Further, the vessel may be sustained by three or more U-, T- or L-formed foil assemblies in foiling mode. In the case of one embodiment of the present application, three U-shaped foil assemblies are used: The Right Foil Assembly (20) comprising a Right Foil (21) connected via a Right Inner Strut (22) and a Right Outer Strut (23). The foil pivots (tilts) along a Right Foil Tilting axis (24) controlled by a Right Foil Tilting Shaft (25). The Left Foil Assembly (30) would be structurally identical to the right assembly, with a Left Foil (31), Inner Strut (32), Outer Strut (33), Tilting Axis (34), and Tilting Shaft (35).

The Front Foil Assembly (40) features a Front foil (41) supported by Front Right Strut (42) and Front Left Strut (43). The assembly tilts along a Front Foil Tilting Axis (44), with rotational adjustments managed through the Front Foil Rotation Axis (45).

These foil assemblies are controlled by Servos (54) which drive the angle-adjustments essential for stabilizing the vessel and facilitating its movements. To increase robustness and make the assemblies as mechanically simple as possible there are no moving parts, hinges or links inside the assemblies but the whole assemblies are tilted and rotated about their respective tilting and rotating axis.

In this embodiment of the present application, a Motor (46) and a Propeller (47) are located at the Front Foil Assembly (40) and provides forward propulsion. The motor's power is dynamically adjusted to increase or decrease the propeller thrust based on the desired speed and navigation requirements.

Further, an Active Stabilization System employs sophisticated stabilization software to counteract the inherent instability of fully submerged foils. The stabilization system may include an IMU (50) with accelerometers, gyroscopes and a compass, Height Sensors (51), Depth Sensor (53) and Servos (54), in addition an optional GPS unit to provide real-time position input for dynamic control and long-term navigation may be included. The stabilization software adjusts the angles of the foils to maintain equilibrium and optimize performance.

The IMU (50) may be an inertial measurement unit that continuously monitors the vessel's orientation. The Height Sensors (51) detect the distance from the water surface (100) using radar or ultrasonic signals (52). The Depth Sensor (53) will monitor the depth of the vessel during submerged operation by measuring the water pressure.

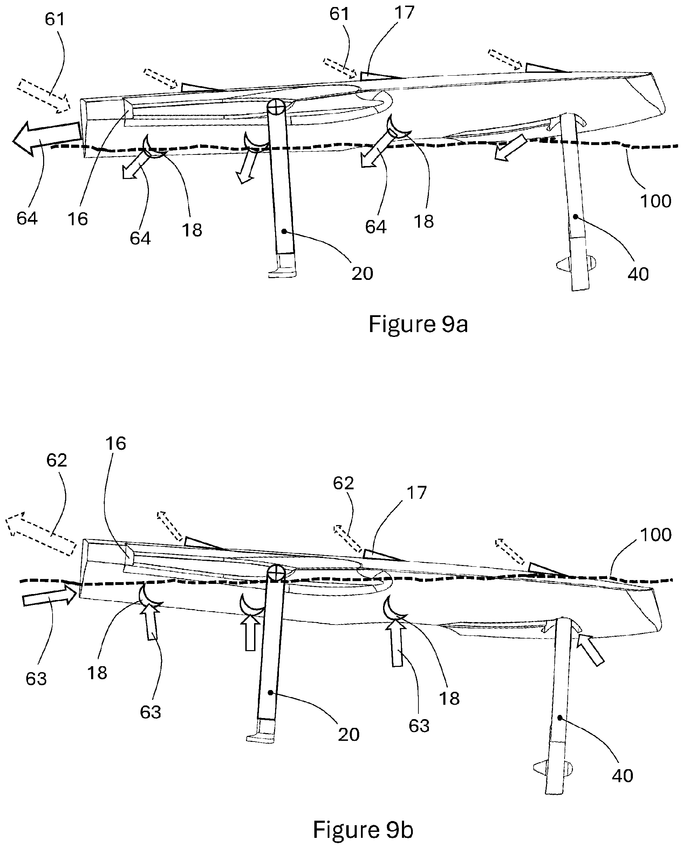

According to some embodiments of the present application, the vessel transitions between surface and submerged operation by filling and draining water from the hull utilizing water vents and air vents. This is shown in Figures 9a and 9b.

Open Air Vents (17) with no moving mechanical parts facilitate the inflow and outflow of air (inward air flow (61) and outward air flow (62)) to manage buoyancy.

Open Water vents (18) with no moving mechanical parts passively control the intake (Inward Water Flow (63)) and discharge (Outward Water Flow (64)) of water to enable controlled submersion and resurfacing. The shape of the vents contributes to effectively draining water out of the hull as the speed in surface mode increases.

During transition to submerged mode, water flows in through the Vents (18), reducing buoyancy. The speed is low, the Front End (12) is pitched down, and the foil angles are adjusted to create downward force. To transition into foiling mode, the process is reversed, with water expelled and the foils adjusted to provide upward lift. The flow of water and air is controlled by the speed and attitude of the vessel.

An important addition to the air and water vents is the Open Back End (16) of the vessel. Furthermore, the Air (17) and water Vents (18) are positioned at critical areas to prevent air or water from being trapped inside the vessel during transitions. The Open Back End (61) and the Air (17) and Water Vents (18) work in tandem with the foil adjustments to maintain stability and buoyancy.

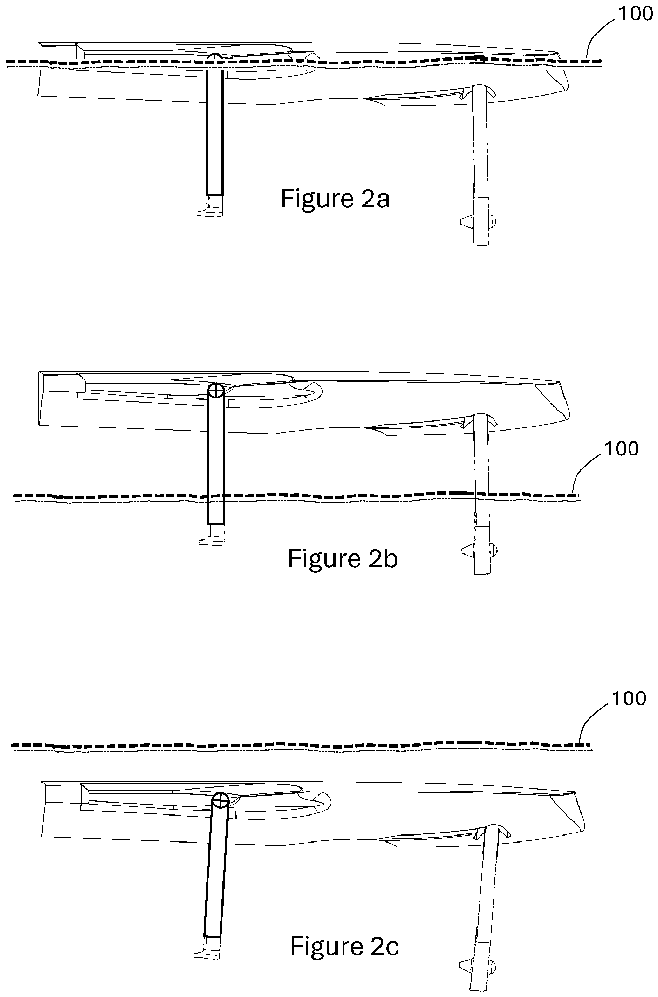

The Triple-Modes of operation are: Surface-level or surface mode as illustrated in Figure 2a, Submerged mode as illustrated in Figure 2c and Foiling mode as illustrated in Figure 2b. The Vessel transitions between surface-level navigation and submerged operation by altering the angles of foils. When transitioning underwater, the foils are adjusted to create downward forces, while water vents fill the drone with water to facilitate submersion. Conversely, when rising to the surface, the foils are adjusted to provide upward lift, bring the drone back to the water surface. By increasing the speed and further adjusting the foils to provide an increased upward lift the water vents drain the drone's interior enabling the drone to fly over the surface in foiling mode. The Surface mode serves as an intermediary state between foiling mode and submerged operations. This configuration ensures smooth transitions, as the drone exploits hydrodynamic lift properties for both ascent and descent. The use of advanced stabilization and passive buoyancy systems ensures seamless mode changes while maintaining operational efficiency and safety.

As already mentioned, the Water Vent System enables passively, yet controlled (through speed and pitch angle) filling and draining of the vessel to facilitate smooth transitions between Surface, Foiling and Submerged modes. This system substitutes complicated ballast tank mechanisms or buoyancy control systems used in other underwater vessels and complements the foil adjustments, ensuring stability during dynamic transitions.

In all embodiments of the present application, the foiling mode is key to the Triple-Modes of operation. Foiling mode is a high-speed operational state in which the vessel's hull is lifted out of the water by the hydrodynamic lift generated by its foil assemblies. The Foiling mode reduces hull-water contact, allowing the vessel to achieve higher speeds while maintaining stability through active stabilization systems. In Foiling mode, the power needed to sustain a certain speed is only a fraction of what it would have been for a similar sized standard boat operating on the water surface.

The Foil Assemblies (20, 30, 40) are mechanically linked to the Servos (54) through Servo Arms (55) and Servo Links (56), enabling precise movement based on real-time input from the IMU (50) and Sensors (51, 53). The Motor (46) and Propeller (47) ensure propulsion and directional control, while the stabilization system coordinates the entire operation to achieve stability and smooth transitions between surface, Foiling and Underwater modes.

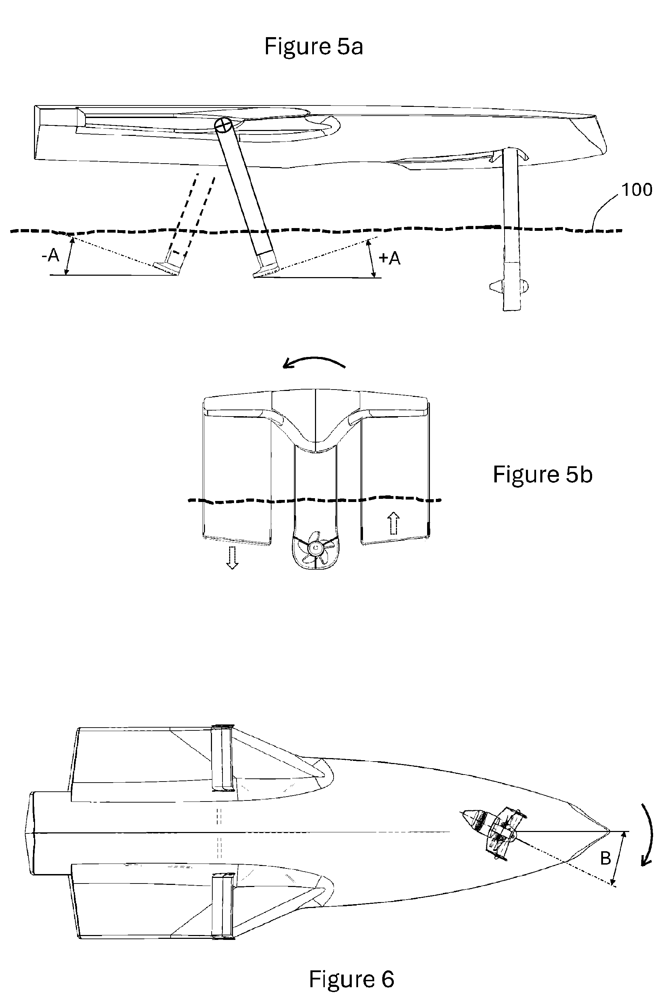

Figures 5 to 8 illustrates how the vessel is controlled by adjusting the forces acting on the foils through tilting and rotating the Foil Assemblies (20, 30, 40) about their respective foil Tilting Axis (24, 34, 44) and the Front Foil rotation axis (45).

The roll of the drone is controlled by tilting the Right Foil Assembly (20) and the Left Foil Assembly (30) in opposite directions. By increasing the incidence angle of the right foil by +A the lift of this foil increases, and by decreasing the incidence angle of the left foil by -A the lift of this foil is decreased. The result makes the drone rotate (roll) to the left. An opposite adjustment of the left and right foils results in a roll to the right.

To alter the travelling direction of the drone (or control the yaw), the Front Foil Assembly (40) with the Motor (46) and Propeller (47) is rotated an angle B about the Front Foil Rotating axis (45) thus creating a sideways force controlling the yaw.

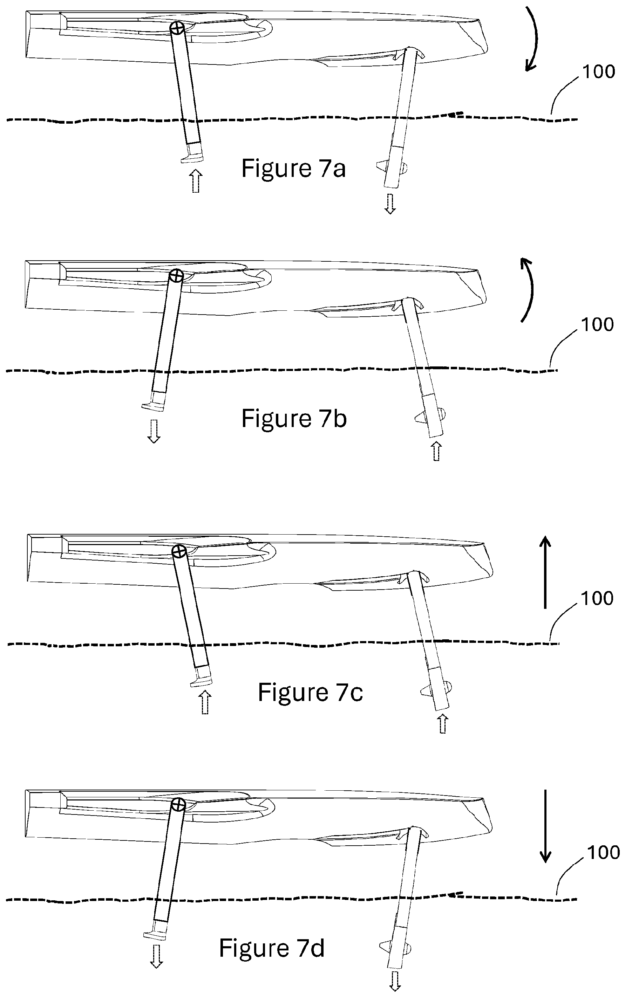

Figures 7a and 7b illustrates how pitch (tilting the Front end (12) up or down) is controlled by increasing or decreasing the lift in the front and the right/left foils in opposite directions. Figures 7c and 7d illustrates how the flight height (vertical movements) is controlled by increasing or decreasing the lift in the front and the right/left foils in the same direction.

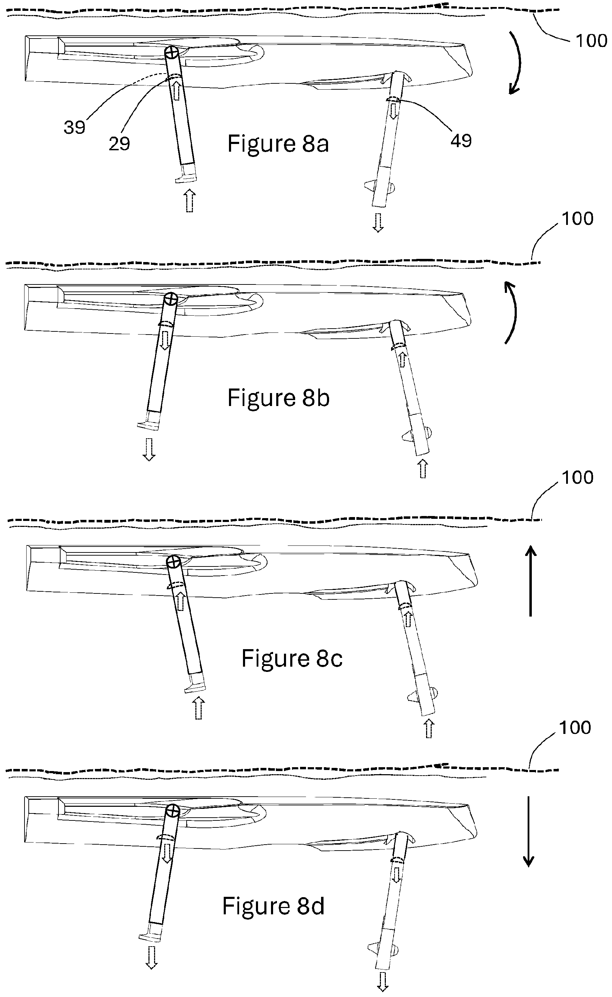

Figures 8a - 8d illustrates that in submerged mode, the stability and depth of the drone is controlled in a similar way. However, alternative embodiments may feature additional Right, Left and Front upper foils (29, 39,49) to improve the control in submerged mode. These extra foils will be above water in Foiling mode.

Embodiments according to the present application provide several notable advantages over conventional vessel and hydrofoil technologies, and some of which are mentioned below:
- Enhanced lift-to-drag ratio through the U-, T- or L-formed foil design.
- Mechanically simple and robust design of both foils and buoyancy control.
- Precise and adaptive stabilization enabling reliable operation in varying conditions.
- Seamless transitions between surface, foiling and submerged modes, broadening the operational scope of the Vessel.
- A robust integration of control systems and sensors for autonomous or semi-autonomous operation.

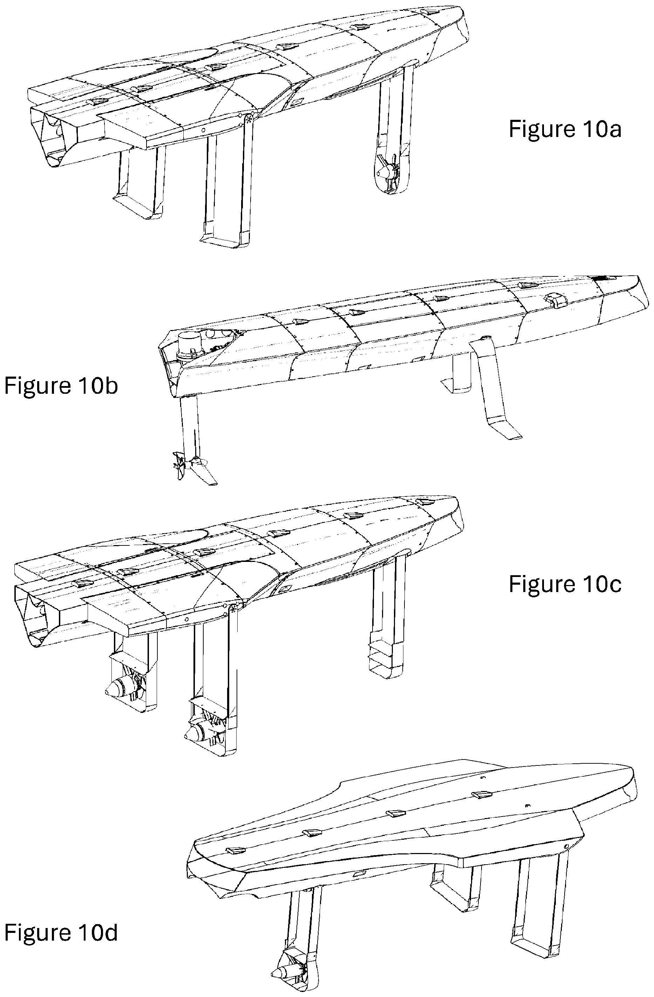

Alternative embodiments of an Unmanned Sub-Surface Foiling Vessel (USSFV) may include different foil configurations and/or multiple hulls. Figure 10 shows four different foil and motor/propeller configurations that all operate essentially in the same way as the embodiment according to the present application.

In Figure 10a a foil configuration similar to the present application is shown, with a single foil comprising a motor and a propeller placed near the front part of the vessel and two U-shaped main foils (right and left) placed closer to the back end.

In Figure 10b a single T-shaped foil assembly comprising the motor and propeller is placed at the back end. This foil assembly may tilt to provide pitch and height control and rotate to provide yaw control. Closer to the front end of the vessel two L-shaped main foils are placed. They contribute a major part of the total lift as well as roll, pitch and height control.

Figure 10c shows a foil configuration with two motors/propellers (thrusters), one on each main foil. Each U-shaped main foil also comprises an extra foil above the thruster to increase the total foil area and lifting capacity. In this configuration the single front foil still provides yaw control, but at very low speeds extra yaw control may also come from differential thrust (from the two thrusters operating at different speed or directions).

Finally Figure 10d shows a configuration quite similar to the one in 10b, but in this case all the foil assemblies are U-shaped to make the whole vessel and the foil assemblies more robust. The single motor and propeller are placed at the back end.

The different foil assemblies may also include hydrofoils that are configured to alter the amount of lift by changing the shape of the foil or the incidence angle of the whole foil or only in dedicated parts of the hydrofoil.

Alternative embodiments according to the present application might also include vessels having air and/or water vents that are passive vents or vents having actively controlled valves or vanes operated by hydraulics, electromagnets, motors or other forms for mechanical movements. The water vents may also be supplemented by active ballast tanks in addition to the filling or draining of water in the hull of the triple-mode vessel.

## Claims

1. A vessel (10) for marine operations including a vessel body (9) and a plurality of fully submerged hydrofoils (20, 30, 40) pivotly connected to the vessel body (9) configured to adjust the amounts and directions of lift and minimize hydrodynamic drag and provide attitude control on the vessel body (9), **characterized in**:
• one or more hulls (11) provided in the vessel body (9) comprising air and water vents (17, 18) for buoyancy control,
• one or more propulsion motors (46) for providing thrust with propellers (47) respectively positioned in the bottom end of one or more of the plurality of fully submerged hydrofoils (20, 30, 40),
• a stabilization system including sensors (51, 52, 53) and actuators for dynamically maintaining balance and control through adjusting angle of the hydrofoils (20, 30, 40),
• wherein the vessel (10) is operable in three distinct modes:
∘ a first mode on the water surface (100) at variable speeds with the one or more hulls (11) partially filled with water,
∘ a second mode, foiling above the water surface (100) at higher speeds, sustained by lift generated by the hydrofoils (20, 30, 40) with the hull(s) (11) drained of water,
∘ a third mode, submerged below the water surface (100) at lower speeds with the one or more hulls (11) filled with water,
and wherein transitions between these modes are achieved by at least dynamically adjusting the angles of the hydrofoils (20, 30, 40) and adjusting the speed of the vessel to control the passing of air and water in and out of said water and air vents (17, 18).

2. The vessel of claim 1, comprising an inertial measurement unit, IMU (50), integral with the stabilization system for monitoring orientation and movement of the vessel body.

3. The vessel of claim 1, wherein the stabilization system includes a gyroscope, accelerometer, compass, height sensor, and depth sensor for real-time monitoring and control of the vessel body.

4. The vessel of claim 1, wherein the water vents (18) are passive vents designed and positioned to facilitate efficient water exchange during transitions between the modes.

5. The vessel of claim 1, wherein the transition between the second mode, the foiling mode, and the third mode, the submerged mode, includes a mandatory intermediate surface mode, the first mode.

6. The vessel of claim 1, wherein one or more of the propellers (47) of the propulsion motor (46) is positioned in one or more of front end positioned fully submerged hydrofoils (20, 30, 40).

7. The vessel of claim 1, wherein one or more of the propellers (47) of the propulsion motor (46) is positioned in one or more of aft end positioned fully submerged hydrofoils (20, 30, 40).

8. A method of operating a vessel (10) for marine operations including a vessel body (9) and a plurality of fully submerged hydrofoils (20, 30, 40) pivotly connected to the vessel body (9) configured to adjust the amounts and directions of lift and minimize hydrodynamic drag and provide attitude control on the vessel body (9), **characterized in**:
• operating the vessel in three distinct modes, including:
∘ a first mode on the water surface (100) at variable speeds, wherein one or more hulls (11) are partially filled with water,
∘ a second mode, foiling above the water surface (100) at higher speeds, sustained by lift generated by fully submerged hydrofoils (20, 30, 40) with the one or more hull (11) drained of water,
∘ a third mode submerged below the water surface (100) at lower speeds, wherein one or more hulls (11) are filled with water,
• transitioning between these modes by:
∘ dynamically adjusting the angles of the hydrofoils (20, 30, 40) to control lift and drag,
∘ regulating buoyancy by letting air and water passing through air and water vents (17, 18), controlled by the speed of the vessel (10),
• and dynamically maintaining balance and control through adjusting the angles of the hydrofoils (20, 30, 40),using a stabilization system with sensors (51, 52, 53) and actuators.

9. The method of claim 8, comprising continuously monitoring the vessel's orientation and movement using an inertial measurement unit, IMU (50), integral with the stabilization system.

10. The method of claim 8, wherein transitions between modes are facilitated by controlling exchange of air and water in and out of water and air vents (17, 18).

11. The method of claim 8, wherein the stabilization system employs a gyroscope, compass, height sensor, and depth sensor for real-time adjustments during the transitions and the operations.

12. The method of claim 8, wherein transitioning from foiling to submerged mode includes an intermediate surface mode in which the vessel (10) operates at or transitions through the water surface.

13. The method of claim 8, comprising controlling a variable thrust propeller (47) of a propulsion motor (46) positioned at the front or at the aft end of the vessel body, to adjust the vessel's speed during transitions between modes.

14. The method of claim 8, wherein the transition from foiling to submerged mode involves reducing propulsion speed, adjusting hydrofoil angles to generate downward force, and allowing water intake through the water vents (18).
